# EUROPÄISCHE PATENTSCHRIFT

(11) **EP 3 907 094 B1**
(45) Veröffentlichungstag und Bekanntmachung des Hinweises auf die Patenterteilung: **05.04.2023**
(21) Anmeldenummer: 21169822.0
(22) Anmeldetag: 22.04.2021
(51) Int. Cl.: B60K 15/03, B60K 13/04

(54) **KRAFTSTOFFTANK FÜR EIN NUTZFAHRZEUG**
FUEL TANK FOR A COMMERCIAL VEHICLE
RÉSERVOIR DE CARBURANT POUR UN VÉHICULE UTILITAIRE

(30) Priorität: 05.05.2020 DE 102020205660
(43) Veröffentlichungstag der Anmeldung: 10.11.2021
(73) Patentinhaber: Deere & Company, Moline, IL 61265 (US)
(72) Erfinder: ZIEGLER, RALF, 68163 Mannheim (DE)
(74) Vertreter: Dehnhardt, Florian Christopher

(56) Entgegenhaltungen:
- EP-A1- 2 386 017
- EP-A1- 3 375 652
- DE-A1-102008 057 521
- US-A1- 2011 272 414

## Beschreibung

Die Erfindung bezieht sich auf einen Kraftstofftank für ein Nutzfahrzeug, mit einem Haupttank und einem Hilfstank.

Ein derartiger Kraftstofftank findet unter anderem bei landwirtschaftlichen Nutzfahrzeugen des Herstellers John Deere Verwendung. Der Kraftstofftank besteht aus einem Haupttank für Dieselkraftstoff sowie einem Hilfstank zur Lagerung einer wässrigen Harnstofflösung, die einem SCR-Katalysator zur Reduktion der in einem Abgasstrom eines Dieselmotors enthaltenen Stickoxide zuführbar ist. Der Hilfstank wie auch ein zugehöriger Einfüllstutzen sind in einer am Haupttank ausgebildeten, mit deren Außenkontur korrespondierenden Einbuchtung untergebracht. Bei den Tanks handelt es sich um separate Behältnisse mit entsprechendem Bauraumbedarf, was im Falle beengter Platzverhältnisse zu unerwünschten Einschränkungen hinsichtlich der Füllkapazität und damit Betriebsdauer des landwirtschaftlichen Nutzfahrzeugs führen kann.

Aus der US 2011/272 414 A1 ist ein Doppelkammertank für Dieselkraftstoff bekannt. Der Doppelkammertank ist einstückig aus thermoplastischem Kunststoff ausgeformt und bildet entlang seiner Außenhülle eine erste Kammer und eine taschenförmig in die erste Kammer hineinragende zweite Kammer. Letztere ist mittels eines Deckels abgedichtet, in dessen Oberseite ein nach außen geführter Einfüllstutzen eintritt.

Es ist Aufgabe der vorliegenden Erfindung, einen bezüglich des Bauraumbedarfs von Haupt- und Hilfstank weiter optimierten Kraftstofftank der eingangs genannten Art anzugeben.

Diese Aufgabe wird durch einen Kraftstofftank für ein Nutzfahrzeug mit den Merkmalen des Patentanspruchs 1 gelöst.

Der Kraftstofftank für ein Nutzfahrzeug umfasst einen Haupttank und einen Hilfstank. Der Hilfstank erstreckt sich ausgehend von einer Öffnung, die in einer Außenwand des Haupttanks vorgesehen und mittels einer flüssigkeitsdicht entlang eines an der Außenwand ausgebildeten Befestigungsbereichs anliegenden Tankabdeckung verschlossen ist, taschenförmig als Fortführung der Außenwand in ein von der Außenwand umgrenztes erstes Tankvolumen, um ein gegenüber dem ersten Tankvolumen abgetrenntes zweites Tankvolumen auszubilden. In den Hilfstank mündet ein Füllstutzen, der innerhalb des ersten Tankvolumens verläuft und an der Außenwand des Haupttanks austritt.

Die solchermaßen erzielte bauliche Integration von Hilfstank und zugehörigem Füllstutzen in den Haupttank führt zu einer besonders kompakten, den zur Verfügung stehenden Bauraum optimal ausnutzenden Ausbildung des Kraftstofftanks. Die Füllkapazität des Kraftstofftanks lässt sich bei gleichem Bauraumbedarf entsprechend erhöhen.

Eine Verwendung des Kraftstofftanks ist bei jeglichen mit einem Dieselmotor ausgestatteten Nutzfahrzeugen, wie beispielsweise land- oder forstwirtschaftlichen Fahrzeugen, Baufahrzeugen oder Lastkraftwagen, denkbar. Der gegenüber dem Hilfstank bezüglich seines Tankvolumens größere Haupttank dient dabei der Aufnahme eines Dieselkraftstoffs, wohingegen in dem Hilfstank eine zur Abgasnachbehandlung vorgesehene wässrige Harnstofflösung gelagert wird. Letztere ist auch unter den Bezeichnungen "AdBlue" oder "DEF - Diesel Exhaust Fluid" bekannt.

Vorteilhafte Ausgestaltungen des erfindungsgemäßen Kraftstofftanks gehen aus den Unteransprüchen hervor.

Vorzugsweise ist an dem Kraftstofftank ein weiterer Füllstutzen vorgesehen, der an der Außenwand in den Haupttank mündet. Der Füllstutzen befindet sich beispielsweise gut zugänglich an einer Oberseite des Haupttanks.

Auch besteht die Möglichkeit, dass der Hilfstank einstückiger Bestandteil der Außenwand des Haupttanks ist. Der so gebildete Kraftstofftank kann aus thermoplastischem Kunststoff bestehen, der durch Blas-, Thermo- oder Rotationsformen oder mittels eines anderen geeigneten Hohlkörperformverfahrens verarbeitet wird. Die Herstellung des Kraftstofftanks kann dabei aus einem Guss oder aber mehrteilig erfolgen, wobei in letzterem Fall die einzelnen Tankbestandteile dauerhaft miteinander verschweißt oder verklebt werden, sodass ein einstückiger Tanckörper entsteht. Je nach Tankinhalt, verwendeter Kunststoffart und Herstellungsverfahren liegt die Stärke der Außenwand des so gebildeten Tankkörpers typischerweise im Bereich von 2 bis 15 mm.

Zwischen dem Befestigungsbereich und der Tankabdeckung kann eine elastische Dichtung verlaufen. Die Tankabdeckung kann unter anderem eine Dosiereinheit, die eine Pumpe zur Beförderung der im Hilfstank befindlichen Harnstofflösung zu einer Einspritzdüse eines SCR-Katalysators umfasst, einen Füllstandssensor wie auch Sensoren zur Erfassung der Temperatur, Leitfähigkeit und anderer Qualitätskriterien der Harnstofflösung tragen. Daneben kann an der Tankabdeckung eine Tankentlüftung sowie eine Temperiereinrichtung, mittels derer während des Betriebs des Nutzfahrzeugs eine bei winterlichen Temperaturen drohende Verfestigung der Harnstofflösung unterbindbar ist, angeordnet sein. Die Tankabdeckung bildet in diesem Fall ein Modul, das sämtliche zur Versorgung des SCR-Katalysators mit Harnstofflösung erforderlichen Betriebskomponenten vereint.

Entlang des Befestigungsbereichs kann ein Montagemittel zur Anbringung der Tankabdeckung vor Korrosion geschützt in die Außenwand eingebettet sein. Im Falle eines hohlgeformten Tanckörpers wird das Montagemittel in eine zugehörige Spritzgussform eingelegt und anschließend zumindest partiell mit Kunststoff umhüllt. Bei dem Montagemittel kann es sich um entlang des Befestigungsbereichs verteilt angeordnete Gewindeeinsätze handeln, in die sich korrespondierende Spannelemente zur Anbringung der Tankabdeckung einschrauben lassen.

Des Weiteren kann der Befestigungsbereich als eine die Öffnung umgrenzende Hinterschneidung zur Anbringung der Tankabdeckung ausgebildet sein. Die Hinterschneidung ragt in diesem Fall in die zu verschließende Öffnung des Hilfstanks hinein, sodass insbesondere ein daran vorgesehenes Montagemittel, das zur Anbringung der Tankabdeckung dient, innerhalb des Hilfstanks liegt. Eine gesonderte Abdichtung des Montagemittels, wie sie im Falle einer außerhalb liegenden Anordnung erforderlich wäre, erübrigt sich so.

Um eine Reinigung des Kraftstofftanks zu vereinfachen, können Haupttank und Hilfstank über ein verschließbares Ablassventil, zum Beispiel in Gestalt einer Ablassschraube, miteinander kommunizieren. Das Ablassventil kann insbesondere in einem Boden des taschenförmigen Hilfstanks derart angeordnet sein, dass dieses bei abgenommener Tankabdeckung von außen leicht zugänglich ist.

Der Kraftstofftank wird beispielsweise mittels Spannbändern oder über Spannelemente, wie sie in der DE 10 2016 213 103 A1 beschrieben sind, an einer tragenden Struktur des Nutzfahrzeugs montiert.

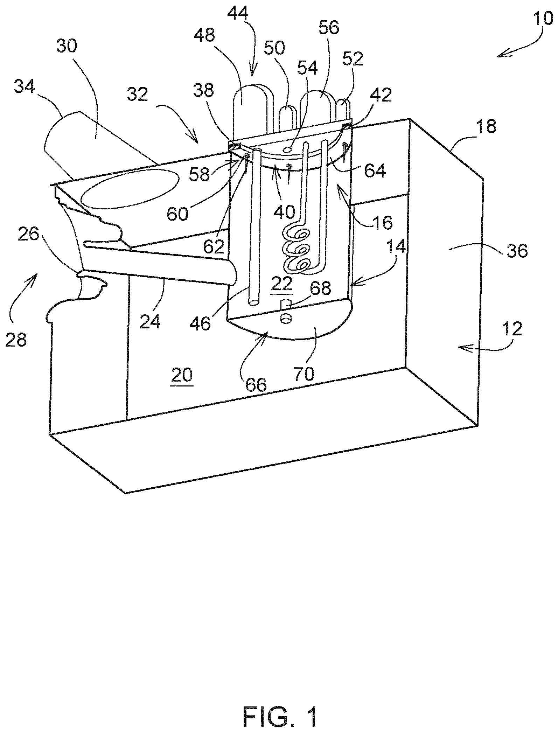

Der erfindungsgemäße Kraftstofftank wird im Folgenden anhand der beigefügten Zeichnung eingehend erläutert.

Die einzige Figur zeigt eine schematische Querschnittsdarstellung eines Ausführungsbeispiel des Kraftstofftanks für ein nicht dargestelltes Nutzfahrzeug.

Der Kraftstofftank 10 besteht aus einem Haupttank 12 für Dieselkraftstoff sowie einem Hilfstank 14 zur Lagerung einer wässrigen Harnstofflösung, die einem SCR-Katalysator zur Reduktion der in einem Abgasstrom eines Dieselmotors enthaltenen Stickoxide zuführbar ist. Eine derartige Harnstofflösung ist auch unter den Bezeichnungen "AdBlue" oder "DEF - Diesel Exhaust Fluid" bekannt.

Der Dieselmotor sowie der SCR-Katalysator sind - wie auch weitere Bestandteile eines diesbezüglichen Abgassystems - in der Figur aus Gründen der Übersichtlichkeit nicht wiedergegeben. Eine Verwendung des Kraftstofftanks 10 ist bei jeglichen mit einem Dieselmotor ausgestatteten Nutzfahrzeugen, wie beispielsweise land- oder forstwirtschaftlichen Fahrzeugen, Baufahrzeugen oder Lastkraftwagen, denkbar.

Der Kraftstofftank 10 wird dabei mittels Spannbändern oder über Spannelemente, wie sie in der DE 10 2016 213 103 A1 beschrieben sind, an einer tragenden Struktur des Nutzfahrzeugs montiert.

Wie in der Figur zu erkennen ist, erstreckt sich der Hilfstank 14 ausgehend von einer Öffnung 16, die in einer Außenwand 18 des Haupttanks 12 vorgesehen ist, taschenförmig als durchgehende Fortführung der Außenwand 18 in ein von der Außenwand 18 umgrenztes erstes Tankvolumen 20 und bildet dort ein gegenüber dem ersten Tankvolumen 20 abgetrenntes zweites Tankvolumen 22 aus. In den Hilfstank 14 mündet ein Füllstutzen 24, der innerhalb des ersten Tankvolumens 20 schräg aufwärts verläuft und an der Außenwand 18 des Haupttanks 12 austritt. Ein äußeres Ende 26 des Füllstutzens 24 ist im Bereich einer Einbuchtung 28 des umgebenden Haupttanks 12 von außen zugänglich und im Betrieb mittels eines nicht gezeigten Tankdeckels verschließbar.

Daneben ist ein weiterer Füllstutzen 30 vorgesehen, der an der Außenwand 18 in den Haupttank 12 mündet. Der weitere Füllstutzen 30 befindet sich an der Oberseite 32 des Haupttanks 12. Ein mittels eines nicht gezeigten weiteren Tankdeckels verschließbares äußeres Ende 34 weist schräg aufwärts von der Oberseite 32 des Haupttanks 12 weg.

Bezogen auf die für den Betrieb des Kraftstofftanks 10 vorgesehene Einbauposition am Nutzfahrzeug befindet sich die Öffnung 16 des Hilfstanks 14 beispielsgemäß an der Oberseite 32 des Haupttanks 12. Diese weist einen der Form des Hilfstanks 14 entsprechenden kreisförmigen Querschnitt auf. In diesem Zusammenhang ist es abweichend von der dargestellten Quaderform des Kraftstofftanks 10 auch vorstellbar, dass der Haupttank 12 als Polyeder mit weiteren Wandabschnitten, insbesondere solchen, die gegeneinander schiefwinklig bzw. schräg verlaufen, ausgebildet ist, wobei sich die Öffnung 16 des Hilfstanks 14 in einem dieser Wandabschnitte befindet. Die Figur gibt insoweit lediglich eine von vielen Möglichkeiten wieder.

Der Hilfstank 14 ist einstückiger Bestandteil der Außenwand 18 des Haupttanks 12. Der so gebildete Kraftstofftank 10 besteht aus thermoplastischem Kunststoff, der durch Blas-, Thermo- oder Rotationsformen oder mittels eines anderen geeigneten Hohlkörperformverfahrens verarbeitet wird. Die Herstellung des Kraftstofftanks 10 erfolgt dabei aus einem Guss oder aber mehrteilig, wobei in letzterem Fall die einzelnen Tankbestandteile dauerhaft miteinander verschweißt oder verklebt werden, sodass ein einstückiger Tankkörper 36 entsteht. Je nach Tankinhalt, verwendeter Kunststoffart und Herstellungsverfahren liegt die Stärke der Außenwand 18 des so gebildeten Tankkörpers 36 im Bereich von 2 bis 15 mm.

Die in der Außenwand 18 des Haupttanks 12 ausgebildete Öffnung 16 ist mittels einer Tankabdeckung 38 verschlossen, wobei die Tankabdeckung 38 flüssigkeitsdicht entlang eines an der Außenwand 18 ausgebildeten Befestigungsbereichs 40 anliegt. Hierzu verläuft zwischen Befestigungsbereich 40 und Tankabdeckung 38 eine elastische Dichtung 42.

Der Tankabdeckung 38 trägt unter anderem eine Dosiereinheit 44, die neben einer in den Hilfstank 14 hineinragenden Ansaugleitung 46 eine Pumpe 48 zur Beförderung der im Hilfstank 14 befindlichen Harnstofflösung zu einer Einspritzdüse des SCR-Katalysators umfasst, einen Füllstandssensor 50 wie auch Sensoren 52 zur Erfassung der Temperatur, Leitfähigkeit und anderer Qualitätskriterien der Harnstofflösung. Daneben ist an der Tankabdeckung 38 eine Tankentlüftung 54 sowie eine Temperiereinrichtung 56, mittels derer während des Betriebs des Nutzfahrzeugs eine bei winterlichen Temperaturen drohende Verfestigung der Harnstofflösung unterbindbar ist, angeordnet. Die Tankabdeckung 38 bildet in diesem Fall ein Modul, das sämtliche zur Versorgung des SCR-Katalysators mit Harnstofflösung erforderlichen Betriebskomponenten vereint.

Entlang des Befestigungsbereichs 40 ist ein Montagemittel 58 zur Anbringung der Tankabdeckung 38 vor Korrosion geschützt in die Außenwand 18 eingebettet. Im Falle des vorliegend hohlgeformten Tankkörpers 36 wird das Montagemittel 58 in eine zugehörige Spritzgussform eingelegt und anschließend zumindest partiell mit Kunststoff umhüllt. Bei dem Montagemittel 58 handelt es sich um entlang des Befestigungsbereichs 40 verteilt angeordnete Gewindeeinsätze 60, in die sich korrespondierende Spannelemente 62 zur Anbringung der Tankabdeckung 38 einschrauben lassen.

Entsprechend der Darstellung in der Figur ist der Befestigungsbereich 40 als eine die Öffnung 16 umgrenzende Hinterschneidung 64 zur Anbringung der Tankabdeckung 38 ausgebildet. Die Hinterschneidung 64 ragt in die zu verschließende Öffnung 16 des Hilfstanks 14 hinein, sodass das daran vorgesehene Montagemittel 58 innerhalb des Hilfstanks 14 liegt. Die Hinterschneidung 64 ist ebenfalls einstückiger Bestandteil der Außenwand 18 des Haupttanks 12.

Um eine Reinigung des Kraftstofftanks 10 zu vereinfachen, kommunizieren Haupttank 12 und Hilfstank 14 über ein verschließbares Ablassventil 66 in Gestalt einer Ablassschraube 68 miteinander. Das Ablassventil 66 ist in einem Boden 70 des taschenförmigen Hilfstanks 14 derart angeordnet, dass dieses bei abgenommener Tankabdeckung 38 von außen leicht zugänglich ist. Abweichend von der Darstellung in der Figur kann am Boden 70 des Hilfstanks 14 ein Kanal ausgebildet sein, der sich durch den Haupttank 12 hindurcherstreckt und an dessen Unterseite austritt. Die Ablassschraube 68 befindet in diesem Fall an der Austrittsmündung des Kanals. Auf diese Weise lässt sich der Inhalt des Hilfstanks 14 unmittelbar nach außen entleeren.

## Patentansprüche

1. Kraftstofftank für ein Nutzfahrzeug, mit einem Haupttank (12) und einem Hilfstank (14), **dadurch gekennzeichnet, dass** sich der Hilfstank (14) ausgehend von einer Öffnung (16), die in einer Außenwand (18) des Haupttanks (12) vorgesehen und mittels einer flüssigkeitsdicht entlang eines an der Außenwand (18) ausgebildeten Befestigungsbereichs (40) anliegenden Tankabdeckung (38) verschlossen ist, taschenförmig als Fortführung der Außenwand (18) in ein von der Außenwand (18) umgrenztes erstes Tankvolumen (20) erstreckt, um ein gegenüber dem ersten Tankvolumen (20) abgetrenntes zweites Tankvolumen (22) auszubilden, wobei in den Hilfstank (14) ein Füllstutzen (24) mündet, der innerhalb des ersten Tankvolumens (20) verläuft und an der Außenwand (18) des Haupttanks (12) austritt.

2. Kraftstofftank nach Anspruch 1, wobei ein weiterer Füllstutzen (30) vorgesehen ist, der an der Außenwand (18) in den Haupttank (12) mündet.

3. Kraftstofftank nach Anspruch 1 oder 2, wobei der Hilfstank (14) einstückiger Bestandteil der Außenwand (18) des Haupttanks (12) ist.

4. Kraftstofftank nach wenigstens einem der vorhergehenden Ansprüche, wobei entlang des Befestigungsbereichs (40) ein Montagemittel (58) zur Anbringung der Tankabdeckung (38) in die Außenwand (18) eingebettet ist.

5. Kraftstofftank nach wenigstens einem der vorhergehenden Ansprüche, wobei der Befestigungsbereich (40) als eine die Öffnung (16) umgrenzende Hinterschneidung (64) zur Anbringung der Tankabdeckung (38) ausgebildet ist.

6. Kraftstofftank nach wenigstens einem der vorhergehenden Ansprüche, wobei Haupttank (12) und Hilfstank (14) über ein verschließbares Ablassventil (66) miteinander kommunizieren.

## Claims

1. Fuel tank for a commercial vehicle, having a main tank (12) and an auxiliary tank (14), **characterized in that** the auxiliary tank (14) extends from an aperture (16), which is provided in an outside wall (18) of the main tank (12) and is closed by means of a tank cap (38) lying liquid-tightly along a fixing area (40) formed on the outside wall (18), in the form of a pocket as a continuation of the outside wall (18) into a first tank volume (20) bounded by the outside wall (18), so as to form a second tank volume (22) which is separated from the first tank volume (20), wherein a filler neck (24), which runs inside the first tank volume (20) and emerges on the outside wall (18) of the main tank (12), opens into the auxiliary tank (14).

2. Fuel tank according to Claim 1, wherein a further filler neck (30) is provided, which opens into the main tank (12) on the outside wall (18).

3. Fuel tank according to Claim 1 or 2, wherein the auxiliary tank (14) is an integral constituent part of the outside wall (18) of the main tank (12).

4. Fuel tank according to at least one of the preceding claims,
wherein along the fixing area (40) an assembly means (58) for attaching the tank cap (38) is embedded into the outside wall (18).

5. Fuel tank according to at least one of the preceding claims, wherein the fixing area (40) is formed as an undercut (64) surrounding the aperture (16) for attaching the tank cap (38).

6. Fuel tank according to at least one of the preceding claims, wherein the main tank (12) and auxiliary tank (14) communicate with each other via a closeable drain valve (66).

## Revendications

1. Réservoir de carburant pour un véhicule utilitaire, avec un réservoir principal (12) et un réservoir auxiliaire (14), **caractérisé en ce que** le réservoir auxiliaire (14) s'étend à partir d'une ouverture (16), qui est prévue dans une paroi extérieure (18) du réservoir principal (12) et fermée au moyen d'un couvercle de réservoir (38) qui s'appuie de manière étanche aux fluides le long d'une zone de fixation (40) réalisée sur la paroi extérieure (18), en forme de poche en tant que prolongement de la paroi extérieure (18) dans un premier volume de réservoir (20) délimité par la paroi extérieure (18) afin de former un deuxième volume de réservoir (22) séparé du premier volume de réservoir (20), un raccord de remplissage (24) débouchant dans le réservoir auxiliaire (14), lequel s'étend à l'intérieur du premier volume de réservoir (20) et sort au niveau de la paroi extérieure (18) du réservoir principal (12).

2. Réservoir de carburant selon la revendication 1, dans lequel un autre raccord de remplissage (30) est prévu, qui débouche dans le réservoir principal (12) au niveau de la paroi extérieure (18).

3. Réservoir de carburant selon la revendication 1 ou 2, dans lequel le réservoir auxiliaire (14) fait partie intégrante de la paroi extérieure (18) du réservoir principal (12).

4. Réservoir de carburant selon au moins l'une quelconque des revendications précédentes, dans lequel un moyen de montage (58) est encastré dans la paroi extérieure (18) le long de la zone de fixation (40) pour le montage du couvercle de réservoir (38).

5. Réservoir de carburant selon au moins l'une quelconque des revendications précédentes, dans lequel la zone de fixation (40) est réalisée sous la forme d'une contre-dépouille (64) délimitant l'ouverture (16) pour le montage du couvercle de réservoir (38).

6. Réservoir de carburant selon au moins l'une quelconque des revendications précédentes, dans lequel le réservoir principal (12) et le réservoir auxiliaire (14) communiquent entre eux par l'intermédiaire d'une soupape d'évacuation obturable (66).
